# EUROPEAN PATENT APPLICATION

(11) **EP 3 182 068 A1**
(43) Date of publication of application: **21.06.2017**
(21) Application number: 16757542.2
(22) Date of filing: 11.05.2016
(51) Int. Cl.: G01C 21/34

(54) **MALFUNCTION EARLY WARNING METHOD AND SYSTEM FOR USE IN TRANSPORT VEHICLE**

(30) Priority: 19.10.2015 CN 201510680884
(71) Applicant: LE Holdings (Beijing) Co., Ltd., Beijing 100025 (CN); Leauto Intelligent Technology (BEIJING) Co. Ltd, Beijing 100025 (CN)
(72) Inventor: LI, Wenrui, Beijing 100025 (CN); CHEN, Kunsheng, Beijing 100025 (CN); XU, Yong, Beijing 100025 (CN); LIN, Wei, Beijing 100025 (CN); LIU, Peng, Beijing 100025 (CN); LI, Dan, Beijing 100025 (CN); ZOU, Yu, Beijing 100025 (CN)
(74) Representative: Cohausz & Florack
(86) International application number: PCT/CN2016/081771
(87) International publication number: WO 2017/067151

(57) **Abstract**

The invention discloses a failure alert method for a vehicle, the method including: if a failure detection device of the present vehicle detects failure information of the present vehicle, then sending the failure information of the present vehicle to an alert device and a wireless communication device; sending, by the wireless communication device, the failure information to the outside; and generating, by the alert device, an alert signal according to the received failure information. The invention further disclose a failure alert device for a vehicle, the device including: a failure detection device; a wireless communication device communicatively connected with the failure detection device, configured to send failure information wirelessly to the outside; and an alert device communicatively connected with the failure detection device and the wireless communication device. The invention alleviates in effect a traffic accident from occurring due to the failure of the vehicle.

## Description

### CROSS-REFERENCE TO RELATED APPLICATIONS

This application claims the benefit of priority to Chinese Patent Application No. 201510680884.4, filed on October 19 2015, the content of which is incorporated herein by reference in its entirety.

### FIELD OF TECHNOLOGY

The present invention relates to the field of traffic security and particularly to a failure alert method and system for a vehicle.

### BACKGROUND

Along with the development of vehicle electronics, an Electronic Control Unit (ECU) in an existing vehicle is generally provided with a self-diagnosis function so that the ECU collects operating state information of respective components of an engine through various sensors (including a temperature sensor, a pressure sensor, a rotation sensor, a flow sensor, a position sensor, an oxygen sensor, an explosion sensor, etc), which is sent to the ECU over transmission lines. The ECU analyzes the signals upon reception of these signals so that the ECU can realize functional states and operating conditions of the respective components of the engine, and then calculate automatically in well-written program to determine which operating elements shall perform which operations in those states, and further send instructions to the operating elements to instruct the operating elements to operate.

Thus the vehicle in which the ECU is installed can detect whether the vehicle has failed or there is such a risk that the vehicle may fail, and if so, then the owner of the vehicle will be asked to take a measure to lower or avoid the possibility of an accident occurring, and also a criterion can be provided for repairing of the vehicle.

If the ECU has failed or is going to fail, generally an alert sign will be displayed to a driver on an instrument panel or the driver will be alerted audibly in the prior art. Although this may work for the driver, if a traveling vehicle fails, then there will also be a serious threat to another vehicle. For example, if a Tire Pressure Monitor System (TPMS) detects unstable tire pressure of the vehicle, which means a risk of explosion of its tire, then it may not be sufficient if only the owner of the vehicle is alerted, because if the tire of the failing vehicle explodes, then the vehicle may be struck into another lane, thus resulting in an accident.

### SUMMARY

In order to address such a technical problem in the prior art that only a failure of the present vehicle can be detected, but a foreign vehicle can not be alerted, an aspect of the invention provides a failure alert method for a vehicle, the method including:
Sending, by a failure detection device of the present vehicle, failure information to an alert device of the present vehicle, and a wireless communication device of the present vehicle, when the failure information is detected by the failure detection device;
sending, by the wireless communication device of the present vehicle, the received failure information of the present vehicle to the outside; and
generating, by the alert device of the present vehicle, an alert signal for the present vehicle according to the received failure information of the present vehicle.

With the failure alert method above for a vehicle according to the invention, a failure or a potential failure of the present vehicle can be detected and alerted to, but also the failure information of the present vehicle can be send to the outside for an alert, so that the alert can be generated when the failure information is received by a surrounding device, to thereby avoid a potential risk so as to greatly lower the probability of a traffic accident occurring due to the failure.

In some embodiments of the failure alert method for a vehicle according to the invention, the method further includes: Receiving, by the wireless communication device of the present vehicle, failure information from a foreign vehicle; sending, by the wireless communication device of the present vehicle, the received failure information from the foreign vehicle to the alert device of the present vehicle, and generating, by the alert device of the present vehicle, an alert signal for the foreign vehicle.

In this embodiment, a failure or a potential failure of the present vehicle can be alerted to, but also the failure information from the foreign vehicle can be received by the wireless communication device, and the failure of the foreign vehicle can be alerted to, so that the driver can identify alert information corresponding to different alert signals and further adjust his or her driving operation as appropriate; and moreover an alert between the respective vehicles can be generated to thereby further secure traffic traveling so as to further lower the number of traffic accidents arising from the failure.

In some embodiments of the failure alert method for a vehicle according to the invention, the method includes:
Sending, by a failure detection device of the present vehicle, failure information to an alert device of the present vehicle, and a wireless communication device of the present vehicle, when the failure information is detected by the failure detection device; acquiring and sending, by a navigation device of the present vehicle, traveling information of the present vehicle to the wireless communication device of the present vehicle;
sending, by the wireless communication device of the present vehicle, the received failure information of the present vehicle to the outside together with the traveling information of the present vehicle; and
generating, by the alert device of the present vehicle, the alert signal for the present vehicle according to the received failure information of the present vehicle.

With this method according to the invention, the wireless communication device of the present vehicle sends the received failure information of the present vehicle to the outside together with the traveling information of the present vehicle, so that a foreign receiver can receive the failure information of the present vehicle, and the traveling information of the present vehicle, and thus the foreign receiver can take a more effective evading measure.

In some embodiments of the failure alert method for a vehicle according to the invention, the navigation device of the present vehicle provides positional information of places nearby the present vehicle where parking is available, at the same time as or after the alert device of the present vehicle generates the alert signal for the present vehicle according to the received failure information of the present vehicle.

In this embodiment, the driver can be further provided with information about the nearby places where parking is available (e.g., repairing stations, temporary parking lots, emergence parking lanes, highway service areas, gas stations, or other places) according to the failure state thereof, so that the driver can locate a serving place where parking and repairing is available, in a timely manner after the failure occurs.

In some embodiments of the failure alert method for a vehicle according to the invention, the method includes: receiving, by the wireless communication device of the present vehicle, traffic safety information from the outside (e.g., failure information or fatigue driving information of a foreign vehicle, and traveling information from the foreign vehicle, positional information sent by a foreign passerby using a terminal, etc.);
sending, by the wireless communication device of the present vehicle, the received traffic safety information from the outside (e.g., the failure information of the foreign vehicle here) to the alert device of the present vehicle; and generating, by the alert device of the present vehicle, the alert signal for the present vehicle; and
sending, by the wireless communication device of the present vehicle, the received traveling information from the foreign vehicle to the navigation device of the present vehicle; and analyzing, by the navigation device of the present vehicle, the traveling information from the foreign vehicle and the traveling information of the present vehicle, and determining and indicating a positional relationship and/or a safety distance between the present vehicle and the foreign vehicle.

In this embodiment, the traveling information of the foreign vehicle and the traveling information of the present vehicle is analyzed and compared, and the positional relationship and/or the safety distance between the present vehicle and the foreign vehicle is determined and indicated, so that the driver can obtain the relative positional relationship between the present vehicle and the foreign vehicle through the navigation device, and take a pertinent evading measure on an appropriate occasion to thereby secure the driver and avoid interference with and even a hazard to another surrounding vehicle and passerby from arising from blind evading due to the absence of a pertinent indicator.

In any one of the embodiments above, the wireless communication device includes a Dedicated Short Range Communications (DSRC) protocol enabled wireless transceiver, which can support the DSRC technology and enable a wireless communication distance of 1000 meters in a clear environment and of 300 meters in a urban populated environment without being affected by a dead zone out of sight, visibility, surrounding noise, and other factors in a radiation scope, so that the alert information can be transmitted/received with higher reliability to thereby ensure a higher alert success ratio.

In any one of the embodiments above, the traveling information includes at least one of positional information, speed information, acceleration information, directional angle information, and other information. Thus the foreign or present vehicle can have clear knowledge of the relative positional relationship between them to thereby take an appropriate evading measure accordingly.

In any one of the embodiments above, the alert signal includes an image and/or audio and/or vibration alert signal, so that alert signals in a number of forms including an image, audio, and vibration can be set, and the user can select as preferred one or more of the alert signals for an alert to thereby satisfy a personalized demand.

In another aspect, an embodiment of the invention provides a failure alert system for a vehicle, the system including:
a failure detection device; a wireless communication device communicatively connected with the failure detection device, configured to send failure information received from the failure detection device to the outside; and an alert device communicatively connected with the failure detection device, configured to generate an alert for the present vehicle according to the failure information received from the failure detection device.

In some embodiments of the failure alert system for a vehicle according to the invention, the wireless communication device is further configured to receive failure information from a foreign vehicle, and the alert device is further configured to generate an alert for the foreign vehicle according to the failure information of the foreign vehicle received from the wireless communication device.

In some embodiments of the failure alert system for a vehicle according to the invention, the system further includes a navigation device communicatively connected with the wireless communication device, configured to acquire and send traveling information of the present vehicle to the wireless communication device; and the wireless communication device is further configured to send the failure information received from the failure detection device to the outside together with the traveling information of the present vehicle.

In some embodiments of the failure alert system for a vehicle according to the invention, the navigation device is further configured to provide positional information of places nearby the present vehicle where parking is available, at the same time as or after the alert device generates the alert signal for the present vehicle.

In some embodiments of the failure alert system for a vehicle according to the invention, the wireless communication device is further configured to receive traffic safety information from the outside (e.g., failure information or fatigue driving information of a foreign vehicle, and traveling information from the foreign vehicle, positional information sent by a foreign passerby using a terminal, etc.), to send the traffic safety information from the outside (e.g., the failure information of the foreign vehicle here) to the alert device of the present vehicle for generating the alert signal for the present vehicle, and to send the traveling information from the foreign vehicle to the navigation device.

The navigation device includes: a position unit, an acceleration sensor, and a vehicle bus read interface, configured to acquire the traveling information of the present vehicle; and a processing unit configured to analyze the traveling information from the foreign vehicle, and the traveling information of the present vehicle, and to determine and indicate a positional relationship and/or a safety distance between the present vehicle and the foreign vehicle.

The vehicle in any one of the embodiments above includes an automobile, a boat or an aircraft.

With the failure alert method and system for a vehicle according to the embodiments of the invention, if the vehicle fails, then the driver thereof can be alerted, but also the surrounding vehicle can be alerted, and alike the failure state of the surrounding vehicle can be detected, so that both the drivers of the present vehicle and the surrounding vehicle can take corresponding measures to evade or leave from the vehicles endangering them.

### BRIEF DESCRIPTION OF THE DRAWINGS

Fig.1 illustrates a flow chart of a failure alert method according to the first embodiment of the invention;
Fig.2 illustrates a flow chart of a failure alert method according to the second embodiment of the invention;
Fig.3 illustrates a flow chart of a failure alert method according to the third embodiment of the invention;
Fig.4 illustrates a flow chart of a failure alert method according to the fourth embodiment of the invention;
Fig.5 illustrates a schematic diagram of distributed ECU nodes according to an embodiment of the invention;
Fig.6 illustrates a schematic diagram of a failure alert system according to the first embodiment of the invention;
Fig.7 illustrates a schematic diagram of a failure alert system according to the second embodiment of the invention; and
Fig.8 illustrates a schematic diagram of a failure alert system according to the third embodiment of the invention.

### DESCRIPTION OF THE EMBODIMENTS

In order to make the objects, technical solutions, and advantages of the disclosure more apparent, the disclosure will be described below in further details with reference to the drawings and particular embodiments thereof. Although the exemplary embodiments of the disclosure are illustrated in the drawings, it shall be appreciated that the disclosure can be embodied in various forms but will not be limited to the embodiments described here. On the contrary, these embodiments are provided in order to enable thorough understanding of the disclosure and to enable the full scope of the disclosure to be conveyed to those skilled in the art.

Some terms as used in the description and the claims refer to particular components. Those skilled in the art shall appreciate that the same component may be denominated by hardware manufacturers using different names. The components may not be distinguished in the description and the claims using their different names, but they will be distinguished as to their functional differences. The words "include" and "comprise" as referred to throughout the description and the claims are defined as open words, so they shall be understood as "include (comprise) but will not be limited to". Preferred embodiments of this application will be described later in the description, but the description will be given for the purpose of describing a general principle of this application but not intended to limit the scope of this application. The scope of the invention as claimed shall be as defined in the appended claims.

In view of this, the disclosure proposes a failure alert method and system for a vehicle, which can be applicable to a portable On-Board Diagnostics (OBD) detector, a motored vehicle, an Internet-of-vehicles server, a mobile terminal, etc., where the vehicle to which the method and system can be applicable includes but will not be limited to a motored vehicle, a boat, an airplane, an aircraft, a bike, an electric vehicle, or another vehicle.

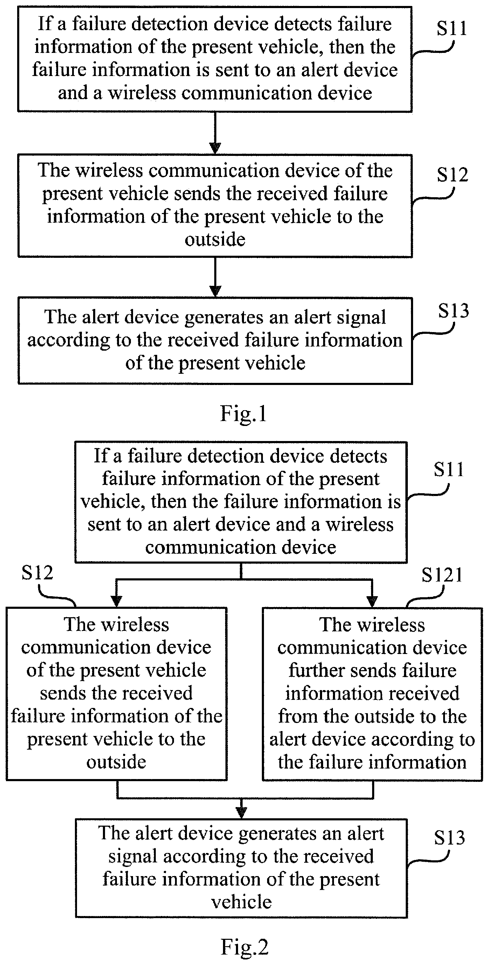

As illustrated in Fig.1, a failure alert method for a vehicle according to an embodiment of the invention includes:
Step S 11. If a failure detection device of the present vehicle detects failure information of the present vehicle, then the failure information of the present vehicle is sent to an alert device of the present vehicle, and a wireless communication device of the present vehicle;
Step S12. The wireless communication device of the present vehicle sends the received failure information of the present vehicle to the outside; and
Step S13. The alert device of the present vehicle generates an alert signal for the present vehicle according to the received failure information of the present vehicle.

As illustrated in Fig.2, the failure alert method for a vehicle according to an embodiment of the disclosure further includes the step S121 in which the wireless communication device further sends failure information received from the outside to the alert device according to the failure information.

In the embodiment above, the wireless communication device can broadcast the failure information in the form of a DSRC signal according to the DSRC communication protocol in order for a timely and working alert for a surrounding vehicle.

Particularly the failure detection device can detect the pressure of a tire, the temperature of an engine, the rotation angle of a steering wheel, failure information of a braking system, an automation system, a shift system, etc., etc., but will not be limited thereto, and in general, the failure detection device according to the embodiment of the invention can be any one or the combination of failure detection devices in the prior art.

The alert device includes a speaker unit and/or a vibration unit and/or an indication unit, where the speaker unit alerts a driver audibly through a beeper, a horn, or another general device; the vibration unit can be installed on a driver seat, a steering wheel, or any site that can be touched directly by the driver, and the vibration unit shall not vibrate excessively so as not to interfere with normal driving; and the indication unit alerts the driver intuitively in the form of an indicating light (for example, an Light-Emitting Diode (LED) light is lighten or strobed).

The vehicle in the embodiment and the following embodiments of the invention includes but will not be limited to an automobile, an electromobile, a bike, a boat, an aircraft, etc.

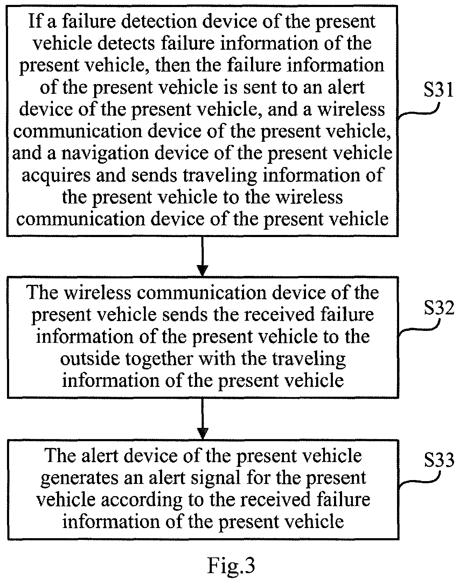

As illustrated in Fig.3, a failure alert method for a vehicle according to an embodiment of the invention includes:
S31. If a failure detection device of the present vehicle detects failure information of the present vehicle, then the failure information of the present vehicle is sent to an alert device of the present vehicle, and a wireless communication device of the present vehicle, and a navigation device of the present vehicle acquires and sends traveling information of the present vehicle to the wireless communication device of the present vehicle;
S32. The wireless communication device of the present vehicle sends the received failure information of the present vehicle to the outside together with the traveling information of the present vehicle; and
S33. The alert device of the present vehicle generates an alert signal for the present vehicle according to the received failure information of the present vehicle.

In some embodiments, the navigation device of the present vehicle provides positional information of places nearby the present vehicle where parking or repairing is available, at the same time as or after the alert device of the present vehicle generates the alert signal for the present vehicle according to the received failure information of the present vehicle.

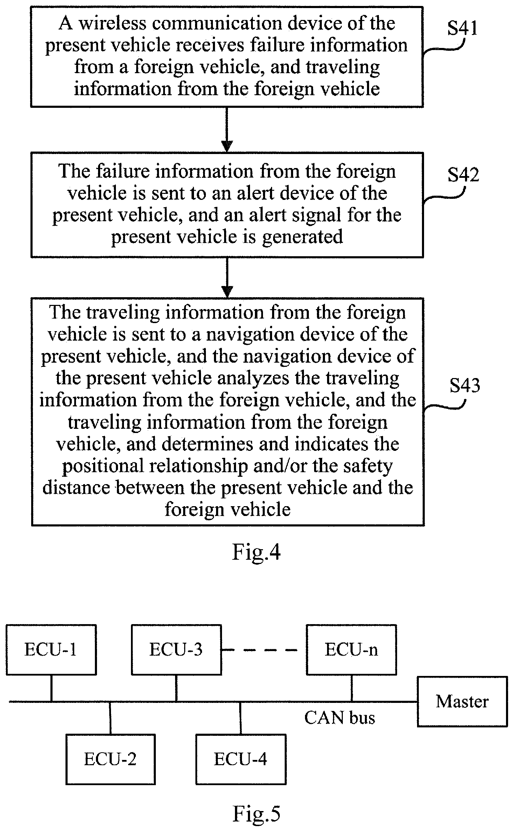

As illustrated in Fig.4, a failure alert method for a vehicle according to an embodiment of the invention includes:
S41. A wireless communication device of the present vehicle receives failure information from a foreign vehicle, and traveling information from the foreign vehicle;
S42. The failure information from the foreign vehicle is sent to an alert device of the present vehicle, and an alert signal for the foreign vehicle is generated; and
S43. The traveling information from the foreign vehicle is sent to a navigation device of the present vehicle, and the navigation device of the present vehicle analyzes the traveling information from the foreign vehicle, and the traveling information from the present vehicle, and determines and indicates the positional relationship and/or the safety distance between the present vehicle and the foreign vehicle.

The traveling information in the embodiment above includes positional information, speed information, acceleration information, and directional angle information of the present vehicle, and the navigation device reads signal data, a user preset destination, and other information over a Controller Area Network (CAN) bus of the present vehicle using the Global Position System (GPS)/ Global Navigation Satellite System (GNSS), or a g-sensor, obtains the positional information, the speed information, driving directional information, a route, and the destination position of the present vehicle, and passes these information to the wireless communication device in a particular data format.

In the embodiment, if the present vehicle fails, then the navigation device provides information about repairing stations, 4S shops, highway service areas, and other relaxation places nearby the present vehicle.

As illustrated in Fig.5, a master node is arranged on the CAN bus of the vehicle, and the failure detection device accesses the CAN bus through the master node to receive packet information sent by ECU nodes of the vehicle (an ECU-1 node, an ECU-2 node, etc.)

In any one of the embodiments above, the failure detection device detects a failure as follows:
The failure detection device sends a failure request packet periodically to the ECU nodes of the vehicle over the CAN bus of the vehicle;
The ECU nodes receiving the request packet feed their failure state information back to the failure detection device through the master node in the form of a packet over the CAN bus of the vehicle; and
The failure detection device analyzes the received packets of the respective ECU nodes, and ranks the failure states of the respective ECU nodes, and then sends the failure information and the failure ranks of the respective ECU nodes to a wireless communication control device.

The ECU nodes include but will not be limited to tire pressure nodes, engine rotation speed nodes, engine temperature nodes, braking device nodes, acceleration device nodes, shift control nodes, light control nodes, etc.

The failure detection device ranks the failure states of the respective ECU nodes in such a way that if the failure state is the current failure, then it will be ranked as a serious risk; if there is no current failure, but there was a history failure, then it will be ranked as an middle risk; and if there is neither current failure nor history failure, then there will be no risk.

The failure state information is stored in one byte, where the current failure state is represented in the bit 7, so if there is the current failure state, then the bit 7 will be set; and the history failure state is represented in the bit 6, so if there is the history failure state, then the bit 6 will be set, and the number of times that the history failure occurs will be represented in the six bits including the bit 0 to the bit 5, so the count will be incremented by one each time the history failure occurs, where at most 64 history failures can be counted. The failure state can be cleared after the vehicle is checked and repaired.

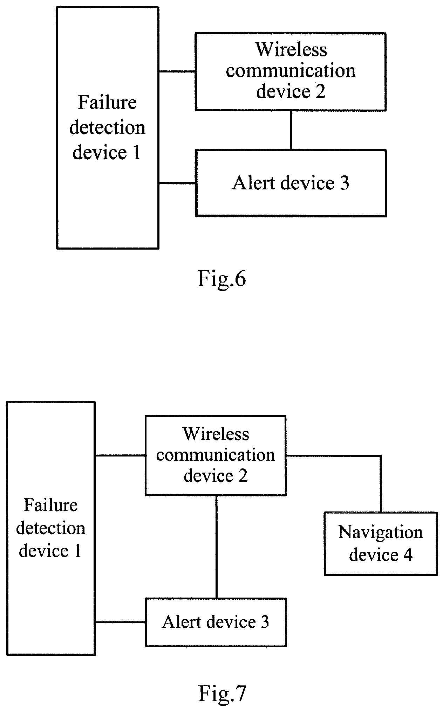

As illustrated in Fig.6, a failure alert system according to an embodiment of the invention includes:
A failure detection device 1 configured to acquire failure information of a present vehicle;
A DSRC enabled wireless communication device 2 communicatively connected with the failure detection device, configured to send the failure information wirelessly from the failure detection device to the outside; and
An alert device 3 communicatively connected with the failure detection device 1 and the wireless communication device 2, configured to generate an alert according to the failure information received from the failure detection device 1.

The wireless communication device 2 is further configured to receive failure information from the outside, and the alert device 3 is configured to generate an alert according to the failure information received from the wireless communication device 2.

The wireless communication device 2 is further configured to receive failure information from the outside, and the alert device 3 is configured to generate an alert according to the failure information from the outside, received from the wireless communication device 2.

In the embodiment above, the failure detection device 1 configured to detect in real time whether the vehicle fails, where the device detects in real time a failure state of the vehicle where the device is located, and if there is a failure occurring, then the device will generate and send failure alert information.

The wireless communication device 2 configured to receive and broadcast the failure alert information to the outside; the wireless communication device further configured to receive failure alert information broadcast by a wireless communication device of a foreign vehicle and transmit a parsing result respectively to the alert device and a navigation device; the wireless communication device includes an Radio Frequency (RF) chip, an antenna, and other components, and supports the DSRC technology and can enable a wireless communication distance of 1000 meters in a clear environment and of 300 meters in a urban populated environment without being affected by a dead zone out of sight, visibility, surrounding noise, and other factors in a radiation scope; and the wireless communication device 2 configured to encapsulate the failure alert information, and traveling information of the vehicle into a data packet in the DSRC format. In hardware, the device includes a microprocessor for handling DSRC communication, and peripheral circuits thereof; and in software, the device includes a full suit of DSRC enabled communication protocol stack software to encapsulate application data (e.g., failure alert data, traveling information of the vehicle, etc.) into a standard DSRC data packet, or to process data received from the foreign vehicle, and to parse the data for the corresponding application data.

The alert device 3 configured to receive the failure alert information and generate the alert; and the alert device 3 further configured to receive the alert failure information, received by the wireless communication device, broadcast from the wireless communication device of the foreign vehicle. The alert device 3 generally alerts a driver intuitively on an LED screen and/or in the form of an audio alert and/or a vibration alert in combination, where the alert includes both an alert to a failure by the driver of the present vehicle and an alert to a failure of another surrounding vehicle.

As illustrated in Fig.7, a navigation device is introduced to the system in Fig.6.

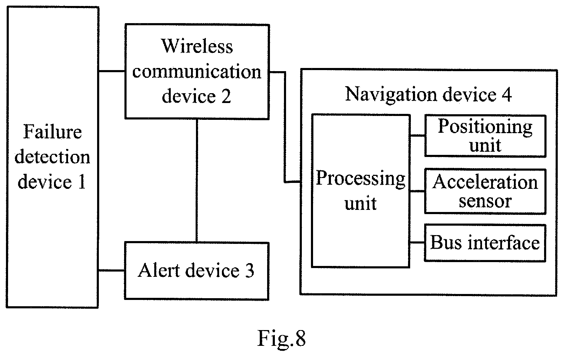

For example, the navigation device 4 includes (as illustrated in Fig.8):
An acceleration sensor configured to determine the traveling direction of the vehicle, where the acceleration sensor is configured as a bus interface via which state information of the vehicle can be read;
A positioning unit configured to obtain traveling information of the present vehicle;
A processing unit configured to receive traveling information of the outside (i.e., traveling information of the foreign vehicle), and to calculate the relative positional relationship between the present vehicle and the foreign vehicle according to the traveling information of the present vehicle and the traveling information from the outside; and
A displayer unit configured to display the relative positional relationship between the present vehicle and the foreign vehicle.

The navigation device 4 configured to transmit the positional information of the vehicle to the wireless communication device for display of the relative positional relationship between the present vehicle and the foreign vehicle. The device is configured for route navigation but also primarily configured to obtain the current position of the vehicle, the speed, route and destination of the vehicle, and other information through the GPS/GNSS or a g-sensor, or by reading the information over the CAN bus of the vehicle without any limitation thereto. Also the failure alert information is obtained, and if it is the present vehicle that fails, then information about nearby repairing stations, 4S shops, emergence parking lanes, and other similar places will be displayed.

In this embodiment, the wireless communication device 2 includes, for example, a control device communicatively connected with the failure detection device, the processing unit, and the alert device, and a DSRC communication protocol enabled wireless transceiver connected with the control device. The control device is configured to encapsulate the traveling information of the present vehicle, and the failure information of the present vehicle into a DSRC data packet, and to parse a DSRC data packet from the outside for the traveling information of the foreign vehicle, and the failure information of the foreign vehicle.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

Several preferred embodiments of the invention have been illustrated and described above, but as described above, it shall be appreciated that the invention will not be limited to the forms disclosed here, and the disclosure here shall not be construed as precluding other embodiments of the invention, but can be applicable to various other combinations, modifications and environments, and can be modified in light of the teaching above or the skills or knowledge in the art without departing from the scope of the disclosure here. The modifications and variations made by those skilled in the art without departing from the spirit and scope of the invention shall fall into the scope of the claims appended to the invention.

## Claims

1. A failure alert method for a vehicle, the method comprising:
Sending, by a failure detection device of a present vehicle, failure information to an alert device of the present vehicle, and a wireless communication device of the present vehicle, when the failure information is detected by the failure detection device;
sending, by the wireless communication device of the present vehicle, the received failure information of the present vehicle to the outside; and
generating, by the alert device of the present vehicle, an alert signal for the present vehicle according to the received failure information of the present vehicle.

2. The failure alert method for a vehicle according to claim 1, wherein the method further comprises:
Receiving, by the wireless communication device of the present vehicle, failure information from a foreign vehicle;
Sending, by the wireless communication device of the present vehicle, the received failure information from the foreign vehicle to the alert device of the present vehicle; and
generating, by the alert device of the present vehicle, an alert signal for the foreign vehicle.

3. A failure alert method for a vehicle, the method comprising:
Sending, by a failure detection device of a present vehicle, failure information to an alert device of the present vehicle, and a wireless communication device of the present vehicle, when the failure information is detected by the failure detection device;
acquiring and sending, by a navigation device of the present vehicle, traveling information of the present vehicle to the wireless communication device of the present vehicle;
sending, by the wireless communication device of the present vehicle, the received failure information of the present vehicle to the outside together with the traveling information of the present vehicle; and
generating, by the alert device of the present vehicle, an alert signal for the present vehicle according to the received failure information of the present vehicle.

4. The failure alert method for a vehicle according to claim 3, wherein the navigation device of the present vehicle provides positional information of places nearby the present vehicle where parking or repairing is available, at the same time as or after the alert device of the present vehicle generates the alert signal for the present vehicle according to the received failure information of the present vehicle.

5. The failure alert method for a vehicle according to claim 3, wherein the method further comprises:
receiving, by the wireless communication device of the present vehicle, failure information from a foreign vehicle, and traveling information from the foreign vehicle;
sending, by the wireless communication device of the present vehicle, the received failure information from the foreign vehicle to the alert device of the present vehicle; and generating, by the alert device of the present vehicle, an alert signal for the foreign vehicle; and
sending, by the wireless communication device of the present vehicle, the received traveling information from the foreign vehicle to the navigation device of the present vehicle; and analyzing, by the navigation device of the present vehicle, the traveling information from the foreign vehicle, and the traveling information from the foreign vehicle, and determining and indicating a positional relationship and/or a safety distance between the present vehicle and the foreign vehicle.

6. The failure alert method for a vehicle according to any one of claims 1-5, wherein the wireless communication device communicates based on a Dedicated Short Range Communications (DSRC) communication protocol.

7. The failure alert method for a vehicle according to any one of claims 1-5, wherein the alert signal comprises an image and/or audio and/or vibration alert signal.

8. The failure alert method for a vehicle according to any one of claims 3-5, wherein the traveling information comprises at least one of positional information, speed information, acceleration information, and directional angle information.

9. The failure alert method for a vehicle according to any one of claims 1-5 wherein the vehicle comprises an automobile, a boat or an aircraft.

10. A failure alert system for a vehicle, the system comprising:
a failure detection device;
a wireless communication device communicatively connected with the failure detection device, configured to send failure information received from the failure detection device to the outside; and
an alert device communicatively connected with the failure detection device, configured to generate an alert for the present vehicle according to the failure information received from the failure detection device.

11. The failure alert system for a vehicle according to claim 10, wherein the wireless communication device is further configured to receive failure information from a foreign vehicle, and the alert device is further configured to generate an alert for the foreign vehicle according to the failure information of the foreign vehicle received from the wireless communication device.

12. The failure alert system for a vehicle according to claim 10, wherein the system further comprises a navigation device communicatively connected with the wireless communication device, configured to acquire and send traveling information of the present vehicle to the wireless communication device; and the wireless communication device is further configured to send the failure information received from the failure detection device to the outside together with the traveling information of the present vehicle.

13. The failure alert system for a vehicle according to claim 12, wherein the navigation device is further configured to provide positional information of places nearby the present vehicle where parking is available, at the same time as or after the alert device generates the alert signal for the present vehicle.

14. The failure alert system for a vehicle according to claim 12, wherein the wireless communication device is further configured to receive failure information from a foreign vehicle, and traveling information from the foreign vehicle, to send the failure information from the foreign vehicle to the alert device for generating an alert signal for the foreign vehicle, and to send the traveling information from the foreign vehicle to the navigation device; and
the navigation device comprises:
a positioning unit, an acceleration sensor, and a vehicle bus read interface, configured to acquire the traveling information of the present vehicle;
a processing unit configured to analyze the traveling information from the foreign vehicle, and the traveling information of the present vehicle, and to determine a positional relationship and/or a safety distance between the present vehicle and the foreign vehicle; and
a displayer configured to display the positional relationship and/or the safety distance between the present vehicle and the foreign vehicle.

15. The failure alert system for a vehicle according to any one of claims 10-14, wherein the wireless communication device comprises a Dedicated Short Range Communications (DSRC) communication protocol enabled wireless transceiver.

16. The failure alert system for a vehicle according to any one of claims 10-14, wherein the alert signal comprises an image and/or audio and/or vibration alert signal.

17. The failure alert system for a vehicle according to any one of claims 12-14, wherein the traveling information comprises at least one of positional information, speed information, acceleration information, and directional angle information.

18. The failure alert system for a vehicle according to any one of claims 10-14, wherein the vehicle comprises an automobile, a boat or an aircraft.
